# EUROPEAN PATENT APPLICATION

(11) **EP 2 536 172 A1**
(43) Date of publication of application: **19.12.2012**
(21) Application number: 10845545.2
(22) Date of filing: 11.08.2010
(51) Int. Cl.: H04W 4/14

(54) **METHOD AND PLATFORM FOR IMPLEMENTING SHORT MESSAGE CUSTOMIZATION SERVICE**

(30) Priority: 11.02.2010 CN 201010111525
(71) Applicant: ZTE Corporation, Shenzhen, Guangdong 518057 (CN)
(72) Inventor: LI, Zhijian, Shenzhen Guangdong 518057 (CN); ZHANG, Jianfeng, Shenzhen Guangdong 518057 (CN); WU, Yannan, Shenzhen Guangdong 518057 (CN)
(74) Representative: Virdee-Crofts, Kulwinder Kaur
(86) International application number: PCT/CN2010/075914
(87) International publication number: WO 2011/097875

(57) **Abstract**

The present invention discloses a method for realizing a short message customization service and a short message customization service platform, wherein the method comprises: a message customizing module edits customization information inputted by a user to be a customization task, wherein the customization task comprises the number of a mobile terminal which receives a customized Internet message (S102); a control module controls a net surfing module to download the customized Internet message according to the customization task (S104); and the control module controls a wireless communication module to send the Internet message to the mobile terminal according to the customization task (S106). The present invention realizes that the users customize and acquire their wanted Internet information by themselves, improves the flexible degree of the subscribers acquiring information, expands the customization range of the mobile phone short message service contents, has the features of being flexible to use and strong applicability, and can sufficiently meet the personalized requirements of the subscribers.

## Description

### Field of the Invention

The present invention relates to the communication field and, in particular, to a method for realizing a short message customization service and a short message customization service platform.

### Background of the Invention

With the development of the mobile communication technology, the operators have launched more and more mobile value-added services to provide richer and more colorful service for the users. Since the users are always in moving status, there is lots of inconvenience for them to pay close attention to their interested information on the internet at all times, and the short message customization service can provide various Internet messages for the users.

Currently, most short message customization services are provided by the communication operators, the short message customization service is located at the operators side, and the short message service provided by the operators for the users only can determine the short message content according to the common focus of one certain user community, it is difficult to consider the unique requirements of each user, which causes some users unable to acquire the wanted information when customizing a short message or some users have obtained many unconcerned information, since the information content, information acquisition time and acquisition mode are not matched with the user requirements and the operators charge simply according to the amount of information received by the users, thus, it brings quite a lot of complaints about the short message service and the user experience is rather poor. In addition, as to the service focused by small groups, since the service traffic thereof is rather small, the service even cannot be provided, the service provided by the relevant art still cannot meet the personalized customization requirements of all the users.

### Summary of the Invention

The present invention provides a method for realizing a short message customization service and a short message customization service platform so as to solve at least the above problems.

A method for realizing a short message customization service is provided according to one aspect of the present invention, comprising: a message customizing module edits customization information inputted by a user to be a customization task, wherein the customization task comprises the number of a mobile terminal which receives a customized Internet message; a control module controls a net surfing module to download the customized Internet message according to the customization task; and the control module controls a wireless communication module to send the Internet message to the mobile terminal according to the customization task.

Preferably, the message customizing module edits customization information inputted by a user to a customization task comprises: the message customizing module accepts customization information inputted by the user; the message customizing module edits the customization information to be a customization task; and the message customizing module adds form header information to the customization task to combine a schedule.

Preferably, the message customizing module accepts customization information inputted by a user comprises: the message customizing module accepts the user to select an Internet message on a web page for customizing, select a sending mode, and input the number of a mobile terminal which receives the customized Internet message through an interface; and the message customizing module extracts a key field of the web page and records the website address of the web page and the location of the customized Internet message on the web page.

Preferably, the customization task further comprises: the website address of the web page where the customized Internet message is located, the location of the Internet message on the web page, a keyword of the web page, and the sending mode, wherein the sending mode comprises at least one of the following: sending form, sending time, sending frequency, and sending condition.

Preferably, the control module controls a net surfing module to download a customized Internet message according to the customization task comprises: the control module stores the schedule; the control module detects the customization task in the schedule at a certain period; the control module judges that the detected customization task meets a sending condition in the customization task, then the control module controls the net surfing module to connect to the website address of the web page where the customized Internet message in the customization task is located; and the net surfing module downloads the content of the web page.

Preferably, the sending condition is one of the following: sending when updating, sending regularly, sending by an instruction, and the mode of the control module judging a customization task meets a sending condition in the customization task comprises: when the sending condition is sending when updating, the control module judges that the customized Internet message on the Internet is updated; or when the sending condition is sending regularly, the control module judges that the customization task reaches a predetermined time; or when the sending condition is sending by an instruction, the control module judges that a short message instruction for triggering the customization task is received from a user.

Preferably, the control module controls a wireless communication module to send the Internet message to the mobile terminal according to the customization task comprises: the control module performs simplification processing to the Internet message according to the sending form in the customization task; and the wireless communication module sends the processed Internet message to the mobile terminal.

Preferably, the sending form is one of the following: sending in the form of a short message and sending in the form of a multimedia message, and the control module performs simplification process to the Internet message according to the customization task comprises: the control module performs standardization preprocessing to the content of the web page where the downloaded Internet message is located; the control module locates the Internet message in the content of the web page according to the keyword and the location of the Internet message in the customization task; and when the sending form in the customization task is sending in the form of a short message, the control module performs text mode simplification processing to the Internet message obtained by locating to acquire the pure text information in the Internet message; or when the sending form in the customization task is sending in the form of a multimedia message, the control module performs multimedia message mode simplification processing to the Internet message obtained by locating to acquire images and pure test information in the Internet message.

A short message customization service platform is provided according to another aspect of the present invention, comprising: a message customizing module, a control module, a net surfing module and a wireless communication module, wherein the message customizing module is configured to edit customization information inputted by a user to be a customization task, wherein the customization task comprises the number of a mobile terminal which receives a customized Internet message; and the control module is configured to control the net surfing module to download the customized Internet message according to the customization task; and further configured to control the wireless communication module to send the Internet message to the mobile terminal according to the customization task.

Preferably, the control module comprises: a USB interface, a storage, and a processor, wherein the processor is configured to control the USB interface to receive a schedule which contains the customization task and store it in the storage; further configured to control the net surfing module to download the Internet message from the Internet through an Ethernet interface thereon; and further configured to perform simplification processing to the downloaded Internet message and control the wireless communication module to send the processed Internet message to the mobile terminal.

By virtue of the present invention, since the users can input relevant information (i.e. customization information) of an Internet message they want to customize through a message customizing module by themselves, thus short messages can be customized according to the customization information inputted by the users themselves, which solves the problem that the short message customization service provided by relevant art cannot meet the personalized customization requirements of all users, thus it realizes that the users customize and acquire their wanted Internet information by themselves, improves the flexible degree of the subscribers acquiring information, expands the customization range of the mobile phone short message service contents, has the features of being flexible to use and strong applicability, and can sufficiently meet the personalized requirements of the subscribers.

### Brief Description of the Accompanying Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flow chart of a method for realizing a short message customization service according to the embodiments of the present invention;
Fig. 2 is a whole structure diagram of a short message customization service platform according to the embodiments of the present invention;
Fig. 3 is a hardware structure diagram of a control module, a net surfing module, and a wireless communication module according to the preferred embodiments of the present invention;
Fig. 4 is a flow chart of a message customizing module creating a schedule according to the preferred embodiments of the present invention;
Fig. 5 is a flow chart of a control module controlling a net surfing module to download a customized Internet message according to a customization task and sending it after having it processed according to the preferred embodiments of the present invention; and
Fig. 6 is a flow chart of extracting simplification information of an Internet message from a downloaded web page according to the preferred embodiments of the present invention.

### Detailed Description of the Embodiments

The embodiments of the present invention will be described hereinafter in detail in conjunction with the drawings thereof. It needs to note that the embodiments of the present application and the features in the embodiments can be combined with each other if there is no conflict.

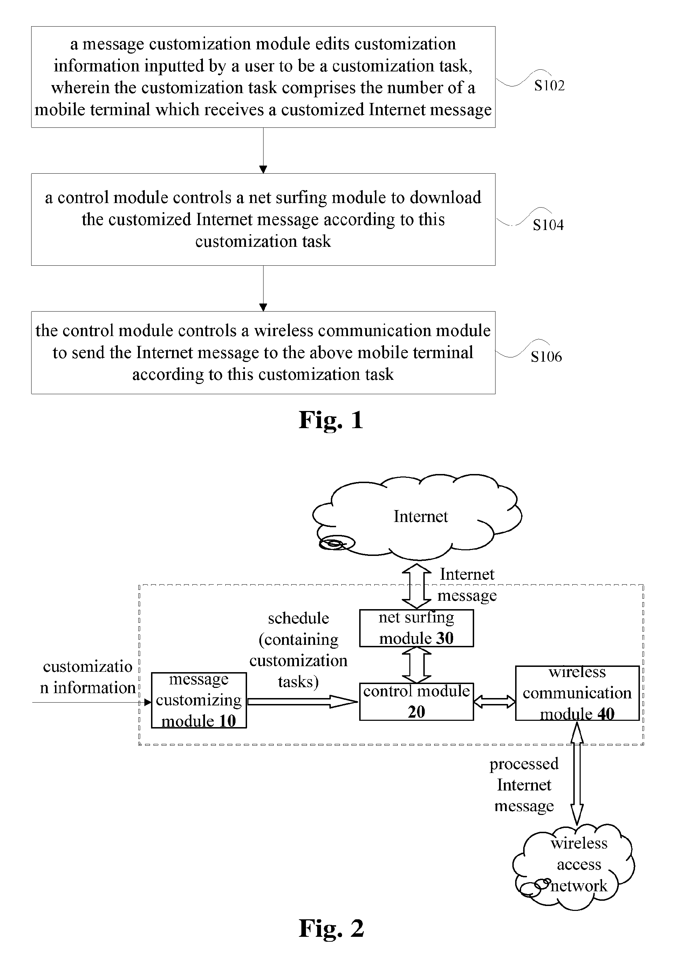

Fig. 1 is a flow chart of a method for realizing a short message customization service according to the embodiments of the present invention, which comprises the following steps:
Step S102: a message customizing module edits customization information inputted by a user to be a customization task, wherein the customization task comprises the number of a mobile terminal which receives a customized Internet message;
Step S104: a control module controls a net surfing module to download the customized Internet message according to the customization task; and
Step S 106: the control module controls a wireless communication module to send the Internet message to the above mobile terminal according to the customization task.

Since the users can input relevant information (i.e. customization information) of an Internet message they want to customize through the message customizing module by themselves in this embodiment, thus short messages can be customized according to the customization information inputted by the users themselves, which solves the problem that the short message customization service provided by relevant art cannot meet the personalized customization requirements of all users. This embodiment is used to realize that the users customize and acquire their wanted Internet information by themselves, which improves the flexible degree for the users to acquire information, expands the customization range of the mobile phone short message service content, has the features of being flexible to use and strong applicability, and can sufficiently meet the personalized requirements of the users.

The above message customizing module can be a software module installed in a personal computer (PC) or a mobile terminal or other devices.

Step S102 comprises: the message customizing module accepts customization information inputted by a user; the message customizing module edits this customization information to be a customization task; and the message customizing module adds form header information to the customization task to combine them into a schedule.

In this embodiment, the users input the Internet information to be customized and other relevant information (i.e. customization information) by themselves, the message customizing module edits the customization information to be a customization task and can add form header information to a plurality of customization tasks to combine a schedule to transfer to the control module, thus the efficiency is improved.

In the above, the message customizing module accepting customization information inputted by a user comprises: the message customizing module accepts, through an interface, the user to select an Internet message on a web page for customizing, select a sending mode, and input the number of a mobile terminal which receives the customized Internet message; and the message customizing module extracts a key field of the web page and records the website address of the web page and the location of the customized Internet message on the web page. Thus, the user only needs to select an Internet message on one certain Internet web page through an interface provided by the message customizing module to customize and edit the same by themselves, and when customizing, the user selects a corresponding page content, and this message customizing module automatically extracts a key field (which is used by the control module to perform simplification processing to the download Internet information in the following steps) of the web page and the web page coordinate (i.e. the location of the Internet message on the web page) where the corresponding content is located. For the user, the operation is easy and it is convenient to use.

In the above method, the customization task comprises: the website address of the web page where the customized Internet message is located, the location of the Internet message on the web page, the keyword of the web page, the sending mode and the number of the mobile terminal which receives the customized Internet message, wherein the sending mode comprises at least one of the following: sending form, sending time, sending frequency, and sending condition. The users can select a required sending mode according to their own requirements so as to facilitate the users to view the short message or multimedia message according to their own requirements. By designating the source, sending mode and etc. of the Internet information, various personalized requirements of the users can be met, more humanized and diverse services are provided, which improves user experience.

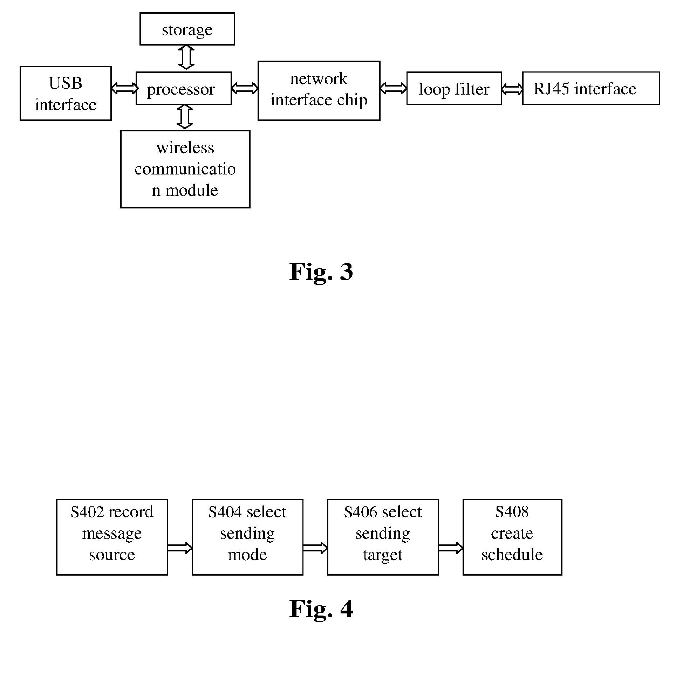

As shown in Figs. 3 and 4, the message customizing module realizes that the user edits the message source (comprising the website address of the web page where the Internet message is located and the location of the Internet message on the page), message sending mode, message sending target (i.e. the mobile terminal which receives the Internet message),etc., wherein each customized message corresponds to a schedule task (i.e. customization task), each schedule task corresponds to one message source, message sending mode, and message sending target, and several schedule tasks are added with form header information and combined together to be added with head information (i.e. form header information) to combine a schedule. The confirmation of the message source is realized by the message customizing module automatically recording the page link address and the location of the requirement message (i.e. Internet message) on the page inputted by the user in Step 402. The message sending mode and sending target are inputted selectively by the user through step S404 and step S406, and the message customizing module completes the customization of a schedule through step S408 and sends this schedule down to the control module.

Step S104 comprises: the control module stores the schedule; the control module detects the customization task in the schedule at a certain period; the control module judges that the detected customization task meets the sending condition in the customization task, then the control module controls the net surfing module to connect the website address of the web page where the customized Internet message is located in the customization task; and the net surfing module downloads the content of the web page.

This embodiment provides an implementation solution for the control module to control the net surfing module to download the web page which contains the customized Internet message according to the information of sending condition and etc. in the customization task. The control module periodically inquires each customization task in the schedule, if the sending condition is met, then it automatically controls the net surfing module to connect the network, open the page with predetermined link address and download the content of this page.

In the above method, the sending condition in the customization task is one of the following: sending when updating, sending regularly and sending by an instruction. Sending when updating refers to automatically connecting the Internet to inquire whether the designated content is updated each time after a predetermined interval, and if it is updated, then start to send; sending regularly refers to automatically connecting the Internet to inquire the designated content and send the same after the predetermined time is reached; and sending by an instruction refers to when receiving a short message instruction sent by the user, connecting the Internet to inquire a message content and send the same according to requirement of the instruction. The users can select the sending condition according to their own requirements, and the control module triggers the starting up of the customization task according to the sending condition of the customization task. Thus, the users can select a required sending mode according to their own requirements so as to facilitate the users to view short messages or multimedia messages according to their own requirements, and sending short messages or multimedia messages with the sending condition required by the users can avoid the users being unable to obtain the required information timely or avoid the users obtaining unwanted information.

In the above, the mode of the control module judging a customization task meeting a sending condition in the customization task comprises: when the sending condition is sending when updating, the control module judges that the customized Internet message on the Internet is updated; or when the sending condition is sending regularly, the control module judges that the customization task reaches a predetermined time; or when the sending condition is sending by an instruction, the control module judges that a short message instruction for triggering the customization task is received from a user.

This embodiment provides an implementation solution for the control module to judge that the customization task meets its sending condition under different sending conditions. Thus, the control module can trigger the starting up of the customization task according to the sending condition designated in the customization task so as to control the net surfing module to download the content of a web page.

Preferably, step S106 comprises: the control module performs simplification processing to the Internet message according to the sending form in the customization task; and the wireless communication module sends the processed Internet message to the mobile terminal.

In the above method, the sending form in the customization task is one of the following: sending in the form of a short message and sending in the form of a multimedia message. In the above, sending in the form of a short message refers to sending by way of pure text short message, and sending in the form of a multimedia message refers to sending the extracted content as image and text information. The users can select the sending form according to their requirement.

In the above, the control module performs simplification processing to the Internet message according to the sending condition in the customization task comprises: the control module performs standardization preprocessing to the contents of the web page where the downloaded Internet message customized by the above user is located; the control module locates the Internet message in the content of the web page according to the keyword and the location of the Internet message in the customization task; and the control module performs simplification processing to the Internet message obtained by locating to acquire the text information or images and text information in the Internet message, wherein when the sending form in the customization task is sending in the form of a short message, the control module performs text mode simplification processing to the Internet message obtained by locating to acquire pure text information in the Internet message; or when the sending form in the customization task is sending in the form of a multimedia message, the control module performs multimedia message mode simplification processing to the Internet message obtained by locating to acquire images and pure text information in the Internet message.

This embodiment provides an implementation solution for the control module to extract the simplification information of the customized Internet message from the content of the downloaded web page. The above standardization preprocess namely is to remove the scripts, Flash, etc. in the content of the web page. The text mode simplification processing refers to removing non-text characters, format identifier, information which cannot be displayed, and etc. and extracting the pure text information therein; the multimedia simplification processing refers to removing format identifier and information which cannot be displayed and extracting the images and pure text information therein.

Fig. 2 shows a schematic diagram of a short message customization service platform according to the embodiments of the present invention. The short message customization service platform comprises: a message customizing module **10**, a control module **20**, a net surfing module **30** and a wireless communication module **40**, in which:
the message customizing module **10** is configured to edit customization information inputted by a user to a customization task, wherein the customization task comprises the number of a mobile terminal which receives the customized Internet message; and
the control module **20** is configured to control the net surfing module **30** to download the customized Internet message according to the customization task; and further configured to control the wireless communication module **40** to send the download Internet message to the mobile terminal according to the customization task.

Preferably, as shown in Fig. 3, the control module **20** comprises: a USB interface, a storage, and a processor, wherein the processor is configured to control the USB interface to receive a schedule which contains the customization task and store it in the storage; the processor is further configured to control the net surfing module to download the Internet message from the Internet through an Ethernet interface thereon; and further configured to perform simplification process to the downloaded Internet message and control the wireless communication module **40** to send the processed Internet message to the mobile terminal.

This short message customization service platform is placed at the user side, such as house, office and other places, and it can provide personal self-service customization short message service for the users, thus the personalized requirements of the users can be sufficiently met.

As shown in Fig. 2, this short message customization service platform consists of four parts of a message customizing module (which can be realized by a message customizing software), a control module, a net surfing module and a wireless communication module. The function and interaction of each part are as follows.

The message customizing software is a software system (executable program) running on a computer terminal or a mobile terminal, which comprises an editing interface, a task creating module, a schedule creating module and a USB driver corresponding to the control module. The editing interface realizes that the user designates one certain message on one certain Internet page for customizing and inputs the number of the sending target (such as mobile phone), the task creating module automatically records the link address of the Internet page of the message source, the location of the page where the message is located, etc.. The schedule creating module completes editing of the Internet message source, message sending mode and message sending target by the user, then creates a schedule and transfers this schedule to the control module through the USB interface. This software allows the user to customize a plurality of tasks, and each task is combined together according to the prescribed format and then is added with form header information to combine a schedule. The format of this schedule is prescribed together by the message customizing software and the control module. After the control module is inserted into the computer through the USB interface, the message customizing software automatically sends the schedule to the control module.

In the above, the format of the schedule contains form header information and a task list. The header information records information of the number of the schedule tasks in the schedule, the size of the space occupied by the schedule, the entry address of each task, etc. Each schedule task (i.e. customization task) corresponds to unique information of message source, sending condition, sending target number, etc. Namely, the customization task comprises the website address of the web page where the customized Internet message is located, the location of the Internet message on this web page and the keyword of this web page, sending mode and the number of the mobile terminal which receives the customized Internet message, wherein the sending mode comprises at least one of the following: sending form, sending time, sending frequency and sending condition, wherein the sending condition is one of the following: sending when updating, sending regularly and sending by an instruction, and the sending form is one of the following: sending in the form of short message and sending in the form of multimedia message.

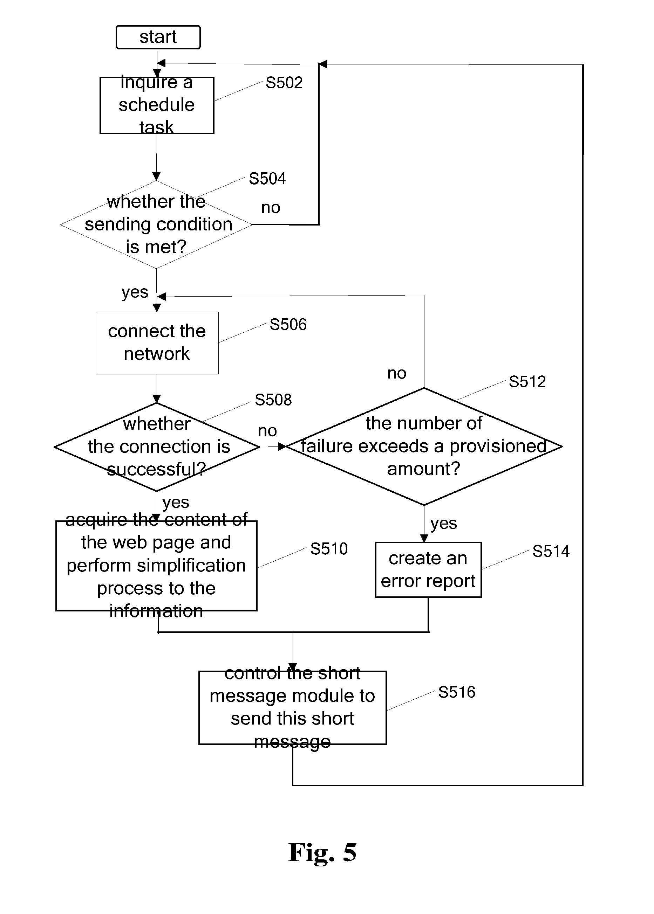

As shown in Fig. 3, the control module is the core processing unit of the service customization platform, which consists of a microprocessor (i.e. the processor in Fig. 3), a storage and an interface circuit (comprising a USB interface, a serial interface, etc.). The control module receives the schedule transmitted by the message customizing software and stores it in the storage. Inquiring each schedule task in the schedule circularly and periodically when running normally, if there is a schedule task, then it is judged whether this schedule task meets its sending condition, if yes, then automatically control the net surfing module to connect the Internet within a predetermined time according to the schedule task, and open the corresponding link page of the message source designated in the schedule task, download all or part of the content (the downloaded content contain the Internet message customized by the user) in this page, then perform simplification processing to this content, and control the wireless communication module to send this short message to the message sending target designated in the schedule task after the processing is completed (the process flow is as shown in Fig. 5). The control module circularly detects whether the wireless communication module receives a new short message while it is working, and if a new short message is received, then judges whether this message meets the defined format, if yes, then parses it and makes a response according to the parsing result. If this message requires to immediately execute one certain task in the schedule, then the control module immediately controls the net surfing module to connect the network and download required information, then controls the wireless communication module to send this message to a designated number after having it processed, thus realizing designated triggering of a schedule task according to the short message sent by the user.

In particular, the control module parses the page, and its basic principles are that most information comes from some important web portals in the current network and the main web pages of these websites are usually created by templates, the style and pattern of which is relatively fixed during one certain time period, and most web pages on the Internet are compiled using HTML (Hyper Text Mark-up Language) language, and the keywords provided by the HTML language are the basis of locating the designated message content. Extracting the simplified information of the Internet message customized by the user from the downloaded network content mainly comprises: 1, locating the Internet message required by the user; and 2, performing simplification processing to it. The location of the message on the page is recorded in the form of web page coordinate, and the coordinate is determined according to the location of the web page key field which is the closest key field containing this designated content. The extracting method of the key field is: starting from the designated content, searching forwardly and backwardly, the first found keyword which can entirely contain this content is the corresponding keyword of this module. The extracting method of page coordinate is: initializing a stack, assuming that the elements from the stack bottom to the stack top are respectively recorded as a[0], a[1], a[2], a[3], ..., each element in the stack is initialized as 0 and a stack element pointer p which points to the first element a[0] is set, then starting to search the previously determined keyword backwardly from the web page, and during the search, if the starting identifier of this keyword is found, then the stack element pointer p moves upwardly by one grid and add the element value to which the pointer p points with 1, and if the ending identifier of this keyword is encountered, then the stack element pointer p moves downwardly by one grid, and so on, stops till it arrives at the designated message content. Assuming that after the search is ended, the element to which p points is a[k], then the corresponding page coordinate of this content is a sequence formed by the elements from the stack bottom a[0] to a[k], i.e. vector (a[0], a[1], a[2], ..., a[k]).

As shown in Fig. 3, the net surfing module consists of a network interface chip, a loop filter, and an RJ45 interface. The net surfing module is controlled by the control module to connect the Internet, download or upload data. The control module is directly connected to the network interface chip and can directly perform read and write operation to this interface chip. The network interface chip realizes that converting the data sent by the controller to serial data and performing simple encapsulation to it. The main functions of the loop filter are impedance match, signal shaping, network isolation, filtering the noises of the network and devices. The net surfing module completes the encapsulation and parsing of data of the TCP/IP protocol physical layer.

The wireless communication module is a GPRS module controlled by the control module, which sends the text short messages or multimedia messages created by the control module to a designated mobile terminal through a wireless network. At the same time, the wireless communication module is further responsible for receiving short messages sent by the mobile terminal, and then delivers them to the control module.

During practical implementation, the above control module, net surfing module and wireless communication module can form a message service control system and it can be realized by a hardware apparatus (as shown in Fig. 3).

Fig. 5 shows a flow chart of a control module controlling a net surfing module to download a customized Internet message according to a customization task and send it after having it processed according to the preferred embodiments of the present invention. The process comprises the following steps.
Step S502, the control module inquires each schedule task (i.e. the above customization task) in the schedule;
Step S504, judge whether the schedule task meets its sending condition, if yes, then turn to step S506, otherwise, turn to step S502;
Step S506, the control module controls the net surfing module to connect the Internet;
Step S508, judge whether the connection is successful, if yes, then turn to step S510, otherwise, turn to step S512;
Step S510, open the corresponding page of the designated web page link address in the schedule task, and download the content of this page, which contains the simplification information of the Internet message customized by the user;
Step S512, judge whether the number of the network connection failure exceeds the prescribed amount, if yes, then turn to step S514, otherwise, turn to step S506;
Step S514, create an error report; and
Step S516, the control module controls the wireless communication module (which can also be referred to as a short message module) to send the simplification information of the Internet message obtained by extraction in step S510 to the message sending target in the form of a short message or a multimedia message, or send the error report created in step S514 to the message sending target in the form of a short message.

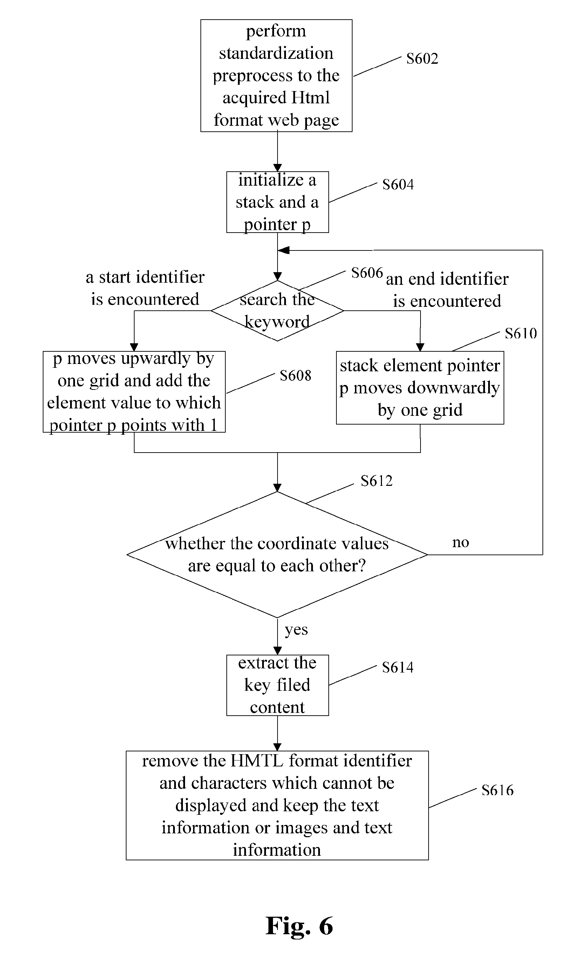

Fig. 6 shows a flow chart of extracting simplification information of an Internet message from a downloaded web page (i.e. step S510 in Fig. 5) according to the preferred embodiments of the present invention. The process comprises the following steps:
Step S602, perform standardization preprocess to the downloaded web page to make it conform with the Html language standard; and
locate the Internet message in the web page according to the keyword information and coordinate values provided in the schedule task table and analyze the selected message contents contained in the table keyword. As to a Html web page, taking the Html content between each table start character (using <table> as a identifier) to the end character (using </table> as a identifier) as one table node, and each table node can further be embedded with other table nodes. The Html content located between the start character and end character of one table node and not located between the start character and end character of any subnodes of this node is the information contained by this node.
Step S604, initialize a stack and set a stack element pointer p which points to the first element a[0] of the coordinate value;
Step S606, search the keyword from the beginning of the web page file, if the start character is encountered, then turn to step S608, and if the end character is encountered, then turn to step S610;
Step S608, each time the start character of the table keyword is found, the stack element pointer p moves upwardly by one grid and add the element value to which pointer p points with 1;
Step S610, if the end character of the table keyword is encountered, then the stack element pointer p moves downwardly by one grid;
Step S612, judge whether the coordinate values is equal to the coordinate values determined in the schedule, if yes, then turn to step S614, otherwise, then turn to step S610;
Step S614, extracting all the content between the start and end characters of the corresponding keyword; and
Step S616, further delete the extracted content according to the Html keyword list, and delete all the Html format identifier information and information which cannot be displayed contained in this content, and if the user selects short message customization, then only keep the pure text information, and if the user selects multimedia message customization, then keep the images and the pure text information. The final information obtained after the redundant information is filtered is the required simplification information content.

It can be seen from the above description that the present invention achieves the following technical effects: since the users can input relevant information (i.e. customization information) of an Internet message they want to customize through a message customizing module by themselves, short messages can be customized according to the customization information inputted by the users themselves, which solves the problem that the short message customization service provided by relevant art cannot meet the personalized customization requirements of all users, thus it realizes that the users customize and acquire their wanted Internet information by themselves, the flexible degree for the users to acquire information is improved, the customization range of the mobile phone short message service content is expanded, and it has the features of being flexible to use and strong applicability, and the personalized requirements of the users can be met sufficiently.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A method for realizing a short message customization service, **characterized in that** it comprises:
a message customizing module edits customization information inputted by a user to be a customization task, wherein the customization task comprises the number of a mobile terminal which receives a customized Internet message;
a control module controls a net surfing module to download the customized Internet message according to the customization task; and
the control module controls a wireless communication module to send the Internet message to the mobile terminal according to the customization task.

2. The method according to claim 1, **characterized in that** the message customizing module edits customization information inputted by a user to a customization task comprises:
the message customizing module accepts customization information inputted by the user;
the message customizing module edits the customization information to be a customization task; and
the message customizing module adds form header information to the customization task to combine a schedule.

3. The method according to claim 2, **characterized in that** the message customizing module accepts customization information inputted by a user comprises:
the message customizing module accepts the user to select an Internet message on a web page for customizing, select a sending mode, and input the number of a mobile terminal which receives the customized Internet message through an interface; and
the message customizing module extracts a key field of the web page and records the website address of the web page and the location of the customized Internet message on the web page.

4. The method according to any one of claims 1 to 3, **characterized in that** the customization task further comprises: the website address of the web page where the customized Internet message is located, the location of the Internet message on the web page, a keyword of the web page, and the sending mode, wherein the sending mode comprises at least one of the following: sending form, sending time, sending frequency, and sending condition.

5. The method according to claim 4, **characterized in that** the control module controls a net surfing module to download a customized Internet message according to the customization task comprises:
the control module stores the schedule;
the control module detects the customization task in the schedule at a certain period;
the control module judges that the detected customization task meets a sending condition in the customization task, then the control module controls the net surfing module to connect to the website address of the web page where the customized Internet message in the customization task is located; and
the net surfing module downloads the content of the web page.

6. The method according to claim 5, **characterized in that** the sending condition is one of the following: sending when updating, sending regularly, sending by an instruction, and the mode of the control module judging a customization task meets a sending condition in the customization task comprises:
when the sending condition is sending when updating, the control module judges that the customized Internet message on the Internet is updated; or
when the said sending condition is sending regularly, the control module judges that the customization task reaches a predetermined time; or
when the sending condition is sending by an instruction, the control module judges that a short message instruction for triggering the customization task is received from a user.

7. The method according to claim 1, **characterized in that** the control module controls a wireless communication module to send the Internet message to the mobile terminal according to the customization task comprises:
the control module performs simplification processing to the Internet message according to the sending form in the customization task; and
the wireless communication module sends the processed Internet message to the mobile terminal.

8. The method according to claim 7, **characterized in that** the sending form is one of the following: sending in the form of a short message and sending in the form of a multimedia message, and the control module performs simplification process to the Internet message according to the customization task comprises:
the control module performs standardization preprocessing to the content of the web page where the downloaded Internet message is located;
the control module locates the Internet message in the content of the web page according to the keyword and the location of the Internet message in the customization task; and
when the sending form in the customization task is sending in the form of a short message, the control module performs text mode simplification processing to the Internet message obtained by locating to acquire pure text information in the Internet message; or when the sending form in the customization task is sending in the form of a multimedia message, the control module performs multimedia message mode simplification processing to the Internet message obtained by locating to acquire images and pure text information in the Internet message.

9. A short message customization service platform, **characterized in that** it comprises: a message customizing module, a control module, a net surfing module and a wireless communication module, wherein:
the message customizing module is configured to edit customization information inputted by a user to be a customization task, wherein the customization task comprises the number of a mobile terminal which receives a customized Internet message; and
the control module is configured to control the net surfing module to download the customized Internet message according to the customization task; and further configured to control the wireless communication module to send the Internet message to the mobile terminal according to the customization task.

10. The short message customization service platform according to claim 9, **characterized in that** the control module comprises: a USB interface, a storage, and a processor, wherein,
the processor is configured to control the USB interface to receive a schedule which contains the customization task and store it in the storage; further configured to control the net surfing module to download the Internet message from the Internet through an Ethernet interface thereon; and further configured to perform simplification processing to the downloaded Internet message and control the wireless communication module to send the processed Internet message to the mobile terminal.
